# FASCICULE DE BREVET EUROPEEN

(11) **EP 0 609 110 B1**
(45) Date de publication et mention de la délivrance du brevet: **14.04.1999**
(21) Numéro de dépôt: 94400035.5
(22) Date de dépôt: 06.01.1994
(51) Int. Cl.: G01D 11/28, G12B 11/02

(54) **Ensemble d'un support, de type cadran, et d'une plaque guide de lumière**
Montage von Trägerskala und lichtleiter
Assembly of a scale type support and lightguide

(30) Priorité: 28.01.1993 FR 9300860
(43) Date de publication de la demande: 03.08.1994
(73) Titulaire: SOCIETE D'APPLICATIONS GENERALES D'ELECTRICITE ET DE MECANIQUE SAGEM, 75783 Paris Cédex 16 (FR)
(72) Inventeur: Metais, Derry, F-95650 Genicourt (FR)
(74) Mandataire: Bloch, Gérard

(56) Documents cités:
- EP-A- 0 125 476
- EP-A- 0 300 592
- DE-A- 3 300 270
- DE-A- 4 203 014

## Description

L'un des domaines de l'invention concerne les cadrans des indicateurs de tableaux de bord de véhicules automobiles, d'aéronefs ou de navires et, plus précisément, les effets ornementaux lumineux, généralement colorés, que les fabricants d'équipements leur impriment.

Les effets en question sont souvent des effets de surface obtenus par cristaux liquides, graphismes particuliers ou autres pavés colorés. Mais ils sont de mise au point difficile, peu homogènes et nécessitent de nombreuses sources d'éclairage.

Parmi ces effets, la demanderesse s'est notamment intéressée aux lisérés lumineux qui bordent, ou parfois traversent, ces cadrans indicateurs, donc de relativement grande longueur. On a déjà proposé d'utiliser pour cela, superposées à leurs cadrans respectifs, des plaques guides de lumière, ou conduits optiques, recevant par la tranche la lumière d'une pluralité de sources, ou même d'une seule, lumière qui est ensuite, après drainage dans la plaque, réfléchie sur un ou des pièges gravés dans la plaque conformément à l'effet qui veut être rendu.

Qu'il n'y ait qu'une source ou qu'il y en ait plusieurs, l'homogénéité de l'effet effectivement rendu, par exemple le long du liséré, est quasiment impossible. Il en est d'autant plus ainsi que les plaques guides sont percées de trous de réception de composants perturbant la transmission de la lumière.

La présente invention vise à proposer une solution intéressante a ce problème d'effets ornementaux, d'ailleurs tant sur les cadrans indicateurs évoqués ci-dessus que sur tout support de caractères graphiques ou alphanumériques définis par sérigraphie.

L'invention concerne plus particulièrement un ensemble d'un support, de caractères graphiques et/ou alphanumériques définis par sérigraphie, et d'une plaque guide de lumière, superposés l'un sur l'autre, la plaque étant une plaque de polyméthacrylate de méthyle chargée de pigments fluorescents et agencée pour être éclairée par sa face opposée au support.

On utilise fréquemment, dans diverses industries, des plaques en polyméthacrylate, du type de celle de la marque protégé Plexiglas, par exemple, qui sont transparentes, incolores et robustes. Parmi ces plaques, celles en polyméthacrylate de méthyle (PMMA) sont utilisées pour capter la lumière par une tranche et la drainer intérieurement vers une autre tranche. Ces plaques, à captage de lumière par la tranche, et qui ne la captent pratiquement pas par les face, nécessitent évidemment que la tranche de captage, en raison de sa surface limitée, soit illuminée par une source de lumière artificielle proche. On trouve encore dans le commerce des plaques de PMMA chargées de pigments fluorescents par exemple de la marque Lisa, protégée au nom de la société Bayer. Elles ont la particularité de pouvoir capter la lumière par les faces, donc par des surfaces beaucoup plus étendues, et de la drainer vers des tranches en l'y restituant sous forte intensité. Plus précisément encore, les charges pigmentaires assurent une fonction de conversion aussi bien en direction qu'en longueur d'onde, si bien que des rayons ultraviolet, par exemple, y sont convertis en lumière visible, d'où la restitution sous forte intensité.

On remarquera que le document DE 4203014 enseigne un conduit de lumière en PMMA fluorescent mais seulement conformé pour, à partir d'un piège à lumière, réfléchir la lumière vers la surface indicatrice et augmenter la luminosité sans augmenter la puissance de la source.

L'invention concerne donc un ensemble du type défini ci-dessus, selon l'une ou l'autre des revendications 1 et 4.

Avec une seule source d'éclairage du côté opposé au support, on obtient par conséquent de façon simple un effet lumineux agréable, de forte intensité et de luminance homogène.

On observera que la plaque indicatrice du document EP 0 300 592 ne comporte pas de nervures en face avant.

La plaque peut comporter un bec annulaire périphérique recourbé vers le support et présentant une tranche annulaire de restitution de l'énergie luminaire s'étendant sensiblement dans le plan du support.

De même, un biseau tronconique peut être formé sur la plaque pour renvoyer la lumière du côté du support et de dimension interne sensiblement identique à celle du support.

Entre les tranches et nervures de restitution de lumière, la face de la plaque tournée vers le support peut avantageusement être recouverte d'un film, d'une couche, de protection, par exemple de couleur blanche, pour améliorer l'effet rendu.

L'invention sera mieux comprise à l'aide de la description suivante de deux exemples de réalisation de l'invention, en référence au dessin annexé, sur lequel :
- la figure 1 est une vue en coupe transversale d'une boîte à lumière comportant un ensemble de l'invention ;
- la figure 2 est une vue de face de l'ensemble de la figure 1 et
- la figure 3 est une vue de face d'un tableau de bord comportant une pluralité d'ensembles de l'invention.

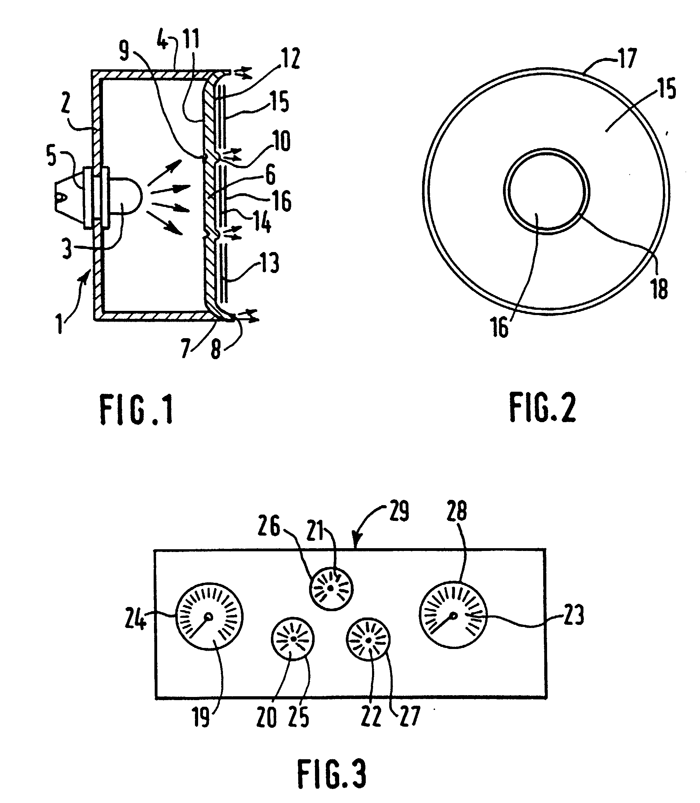

En référence à la figure 1, une boîte à lumière 1 comporte, ici, un fond circulaire 2, sur lequel est fixée, par son culot 5, une ampoule d'éclairage 3, une paroi latérale cylindrique 4, adjacente au fond 2 et une plaque de fermeture circulaire 6, sortie de moule, opposée au fond 2. Le fond 2 et la paroi 4 sont revêtus intérieurement d'une couche de réflexion, ici de couleur blanche.

La plaque 6 est en méthacrylate de méthyle (PMMA) chargée de pigments fluorescents. La plaque 6 comporte un bec annulaire périphérique 7 recourbé vers l'extérieur , quasiment tangent à la paroi 4, et qui présente une tranche annulaire 8 de restitution de lumière s'étendant sensiblement parallèlement au fond 2 et à la partie centrale de la plaque 6. Dans cette partie centrale de la plaque 6, sur sa face tournée vers le fond 2, est gravée une rainure circulaire 9 en forme de V ouvert vers l'intérieur de la boîte 1 et, sur sa face 12 tournée vers l'extérieur, en regard de la rainure 9, est formée une nervure circulaire 10 de restitution de lumière, la rainure 9 et la nervure 10 s'étendant respectivement le long de deux cercles ornementaux identiques et superposés.

La face 12 de la plaque 6 est recouverte, entre le bec 7 et la nervure 10, d'une couche annulaire de protection 13, et, à l'intérieur de la nervure 10, d'une couche circulaire 14, les deux couches 13, 14, du côté tourné vers la plaque 6, étant de couleur blanche.

Superposées sur les couches 13, 14 et, indirectement sur la plaque 6, se trouvent respectivement deux cadrans, l'un annulaire 15, l'autre circulaire 16, supports de caractères graphiques et alphanumériques obtenus par sérigraphie et s'étendant sensiblement dans le plan de la tranche 8. Les couches 13, 14 sont donc intercalées entre la plaque 6 et les cadrans supports 15, 16.

Lorsque l'ampoule 3 est allumée, elle éclaire la face 11 de la plaque 6 qui capte la lumière et la draine jusqu'à la tranche 8 qui la restitue pour former un liseré lumineux 17 (figure 2) bordant le cadran 15. La rainure 9 piège une partie de la lumière drainée dans la plaque 6 et la renvoie vers la nervure 10 qui restitue cette partie de lumière pour former un second liseré 18 qui borde, ou encadre, le cadran 16 ou, aussi, qui traverse l'ensemble des deux cadrans 15, 16.

La figure 3 représente l'ensemble 29 d'un tableau de bord qui comporte, en l'espèce, cinq cadrans indicateurs 19-23 entourés respectivement de cinq liserés 24-28 obtenus comme l'un ou l'autre des liserés 17, 18.

On soulignera que dans le cas où l'ampoule 3 est une source rayonnant dans l'ultraviolet, ou dont la longueur d'onde est proche de celle de l'ultraviolet, on obtient, grâce à l'invention, des lisérés de couleurs bleue d'excellentes luminance et colorimétrie.

## Revendications

1. Ensemble d'un support (15, 16), de caractères graphiques et/ou alphanumériques définis par sérigraphie, et d'une plaque (6) guide de lumière, superposés l'un sur l'autre, la plaque (6) étant une plaque de polyméthacrylate de méthyle chargée de pigments fluorescents et agencée pour être éclairée (3) par sa face (11) opposée au support (15, 16) caractérisé par le fait que la plaque (6) est conformée en périphérie (7) pour produire, du côté du support (15, 16), un effet de liséré lumineux (17) bordant le support (15, 16).

2. Ensemble selon la revendication 1, dans lequel la plaque (6) comporte un bec annulaire périphérique (7) recourbé vers le support (15, 16) et présentant une tranche (8) annulaire de restitution de l'énergie luminaire s'étendant sensiblement dans le plan du support (15, 16).

3. Ensemble selon la revendication 1, dans lequel un biseau tronconique est formé sur la plaque pour renvoyer la lumière du côté du support et de dimension interne sensiblement identique à celle du support.

4. Ensemble d'un support (15, 16), de caractères graphiques et/ou alphanumériques définis par sérigraphie, et d'une plaque (6) guide de lumière, superposés l'un sur l'autre, la plaque (6) étant une plaque de polyméthacrylate de méthyle chargée de pigments fluorescent et agencée pour être éclairée (3) par sa face (11) opposée au support (15, 16), caractérisé par le fait que la plaque (6) comporte une rainure (9) sensiblement en V gravée sur sa face (11) opposée au support (15, 16) pour piéger la lumière et la renvoyer vers la face (12) tournée vers le support (15, 16) et, sur sa face tournée vers le support et en regard de la rainure (9), une nervure (10) de restitution de l'énergie lumineuse, pour produire du côté du support (15, 16) un effet de liséré lumineux d'encadrement (18).

5. Ensemble selon l'une des revendications 1 à 4, dans lequel une couche de protection (13; 14) et intercalée entre la plaque (6) et le support (15, 16).

6. Ensemble selon l'une des revendications 1 à 5, dans lequel la plaque (6) reçoit un éclairage ultraviolet.

## Claims

1. Assembly of a support (15, 16) for graphic and/or alpha numeric characters defined by screen-printing, and of a light-guide plate (6), superimposed one on the other, the plate (6) being a methylpolymethacrylate plate containing fluorescent pigments and arranged in order to be illuminated (3) through its side (11) opposite the support (15, 16), characterised by the fact that the plate (6) is shaped on its periphery (7) in order to produce, on the side of the support (15, 16), a luminous edging effect (17) bordering the support (15, 16).

2. Assembly according to Claim 1, in which the plate (6) comprises a peripheral annular lip (7) curved towards the support (15, 16) and comprising an annular rim (8) for restoring the light energy extending substantially in the plane of the support (15, 16).

3. Assembly according to Claim 1, in which a frustoconical chamfer is formed on the plate to return the light from the side of the support and having an internal dimension substantially identical to that of the support.

4. Assembly of a support (15, 16) for graphic and/or alphanumeric characters defined by screen-printing, and of a light-guide plate (6), superimposed one on the other, the plate (6) being a methylpolymethacrylate plate containing fluorescent pigments and arranged in order to be illuminated (3) through its side (11) opposite the support (15, 16), characterised by the fact that the plate (6) comprises a substantially V-shaped groove (9) engraved on its side (11) opposite the support (15, 16) for trapping the light and returning it towards the side (12) turned towards the support (15, 16) and, on its side turned towards the support and opposite the groove (9), a rib (10) for restoring the light energy, for producing on the side of the support (15, 16) a framing luminous edging effect (18).

5. Assembly according to one of Claims 1 to 4, in which a protective layer (13, 14) is interposed between the plate (6) and the support (15, 16).

6. Assembly according to one of Claims 1 to 5, in which the plate (6) receives ultraviolet illumination.

## Patentansprüche

1. Anordnung mit einem Träger (15, 16), graphischen und/oder alphanumerischen, durch Siebdruck erzeugten Zeichen und mit einer Lichtleiterplatte (6), wobei diese Elemente übereinander liegen und wobei die Platte (6) aus Polymethacrylsäuremethylester mit fluoreszierenden Pigmenten ausgebildet und derart angeordnet ist, daß sie auf ihrer dem Träger (15, 16) entgegengesetzten Fläche (11) mit Licht anstrahlbar ist,
**dadurch gekennzeichnet,**
daß die Platte (6) an ihrem Umfang (7) derart ausgebildet ist, daß sie auf der Seite des Trägers (15, 16) den Effekt eines leuchtenden Randstreifens (17) erzeugt, der den Träger (15, 16) einfaßt.

2. Anordnung nach Anspruch 1, wobei die Platte (6) einen ringförmigen Umfangsrand (7) aufweist, der in Richtung des Trägers (15, 16) gebogen ist und einen ringförmigen Randabschnitt (8) aufweist, der die Lichtenergie herausgibt and im wesentlichen in der Ebene des Trägers (15, 16) liegt.

3. Anordnung nach Anspruch 1, wobei auf der Platte eine kegelstumpfförmige, im wesentlichen das gleiche Innenmaß wie der Träger aufweisende Schrägfläche ausgebildet ist, um das Licht auf der Seite des Trägers zurückzuwerfen.

4. Anordnung mit einem Träger (15, 16), graphischen und/oder alphanumerischen durch Siebdruck erzeugten Zeichen und mit einer Lichtleiterplatte (6), wobei diese Elemente übereinander liegen, und wobei die Platte (6) aus Polymethacrylsäuremethylester mit fluoreszierenden Pigmenten ausgebildet und derart angeordnet ist, daß sie auf ihrer dem Träger (15, 16) entgegengesetzten Fläche (11) mit Licht anstrahlbar ist,
**dadurch gekennzeichnet,**
daß die Platte auf ihrer dem Träger (15, 16) entgegengesetzten Fläche (11) eine im wesentlichen V-förmige Rille aufweist, um das Licht einzufangen und es in Richtung auf die dem Träger (15, 16) zugewandte Fläche (12) zurückzuwerfen, und daß die Platte auf ihrer dem Träger zugewandten Fläche eine der Rille (9) gegenüberliegende Rippe (10) aufweist, die die Lichtenergie herausgibt um auf der Seite des Trägers (15, 16) den Effekt einer leuchtenden Umrahmung (18) zu erzeugen.

5. Anordnung nach einem der Ansprüche 1 bis 4, wobei zwischen der Platte (6) und dem Träger (15, 16) eine Schutzschicht (13, 14) zwischengeschaltet ist.

6. Anordnung nach einem der Ansprüche 1 bis 5, wobei die Platte (6) ultraviolettem Licht ausgesetzt ist.
